# EUROPÄISCHE PATENTSCHRIFT

(11) **EP 2 994 347 B1**
(45) Veröffentlichungstag und Bekanntmachung des Hinweises auf die Patenterteilung: **23.02.2022**
(21) Anmeldenummer: 14724676.3
(22) Anmeldetag: 06.05.2014
(51) Int. Cl.: B60Q 1/00, G01S 17/931, G01S 17/10, G01S 13/931, G01S 7/481

(54) **FAHRZEUGSCHEINWERFER ODER FAHRZEUGRÜCKLEUCHTE**
VEHICLE HEADLIGHT OR VEHICLE TAILLIGHT
PROJECTEUR OU FEU ARRIÈRE DE VÉHICULE

(30) Priorität: 06.05.2013 AT 3762013
(43) Veröffentlichungstag der Anmeldung: 16.03.2016
(73) Patentinhaber: Bluetechnix Group GmbH, 1230 Wien (AT)
(72) Erfinder: ROLAND, Oberhammer, A-1040 Wien (AT); ROBERT, Hranitzky, A-2540 Bad Vöslau (AT)
(74) Vertreter: KLIMENT & HENHAPEL
(86) Internationale Anmeldenummer: PCT/EP2014/059250
(87) Internationale Veröffentlichungsnummer: WO 2014/180856

(56) Entgegenhaltungen:
- EP-A1- 1 323 570
- EP-A1- 2 477 043
- JP-U- H0 364 838
- US-A1- 2008 158 045
- US-A1- 2008 309 914
- US-A1- 2010 191 418
- US-B2- 6 459 476

## Beschreibung

Die Erfindung bezieht sich auf einen Fahrzeugscheinwerfer mit einem Gehäuse und innerhalb des Gehäuses angeordneter, modulierbarer Licht- oder IR-Strahlungsquellen, sowie einer Schnittstelle zur Anbindung an einen externen Fahrzeugprozessor, gemäß dem Oberbegriff von Anspruch 1.

Als Fahrzeugscheinwerfer und Fahrzeugrückleuchte werden hierbei und im Folgenden alle in den Außenbereich eines Fahrzeuges abstrahlenden Licht- oder IR-Strahlungsquellen verstanden, also sowohl Frontscheinwerfer als auch Rücklichter, die der Ausleuchtung oder der Signalgebung dienen. Hierfür werden zunehmend Fahrzeugscheinwerfer und Fahrzeugrückleuchte eingesetzt, bei denen auf Modulträgern matrixartig angeordnete LEDs (Light Emitting Diodes) als Licht- oder IR-Strahlungsquellen angeordnet sind. Werden die hierbei verwendeten LEDs zudem mit AFL (adaptive forward lighting)-Technologie betrieben, ist das Ausleuchtprofil des Fahrzeugscheinwerfers variierbar, wobei die LED-Module mithilfe eines Fahrzeugprozessors je nach gewünschtem Ausleuchtprofil unterschiedlich stark gedimmt werden. Veränderungen des Ausleuchtprofils der Fahrzeugscheinwerfer während der Fahrt, also etwa bei Kurvenfahrten, sich verändernden Witterungsverhältnissen oder bei erkannten Objekten am Straßenrand, werden im Folgenden auch als dynamische Ausleuchtprofile bezeichnet. Das gewünschte Ausleuchtprofil kann etwa mithilfe entsprechender Sensoren gewählt werden, die Informationen aus der Fahrzeugumgebung ermitteln und über den Fahrzeugprozessor die Fahrzeugscheinwerfer entsprechend steuern.

Das LED-Modul etwa für den Frontscheinwerfer mischt weißes Licht durch eine Kombination mehrerer Wellenlängen. Diese Wellenlängen werden zum Teil indirekt durch blaue LEDs aus Galliumnitrid (GaN) und einer Konverterschicht erzeugt und zum Teil direkt durch gelbe LEDs aus Aluminiumindiumgalliumphosphid (AlInGaP). Die LED-Module für Rücklichter bzw. Bremslichter erzeugen die Wellenlängen um 700nm durch rote LEDs aus Halbleitern, wie Aluminiumgalliumarsenid (AlGaAs), Galliumarsenidphosphid (GaAsP), Aluminiumgalliumindiumphosphid (AlGaInP) oder Galliumphosphid (GaP). Die Strahlformung der LED-Module wird in der Regel durch Kunststofflinsen und Spiegelreflektoren unterstützt.

Des Weiteren wurden Versuche unternommen, Fahrzeuge mit so genannten "Time of flight" (ToF)-Kameras auszustatten. Bei ToF-Kameras handelt es sich um Kameras, die nicht nur ein 2D-Bild aufnehmen, sondern für jedes Aufnahmepixel auch eine Tiefeninformation messen. Unter Tiefeninformation werden Informationen über die Distanzen zwischen den einzelnen Objekten einer Szene und der ToF-Kamera verstanden. ToF-Kameras werden auch als aktive Kameras bezeichnet, da sie mit einer eigenen Lichtquelle ausgestattet sind, die im Folgenden auch als ToF-Lichtquelle bezeichnet wird. Das von dieser Lichtquelle emittierte Licht wird an den Objekten einer aufzunehmenden Szene reflektiert und gelangt dadurch als Rückstreustrahlung in den Erfassungsbereich des Bildsensors der Kamera. Die Tiefeninformation wird aus dem reflektierten Licht über Laufzeit- bzw. Phasendifferenz-Messungen ermittelt.

In der US 2010/0191418 A1, US 2008/309914 A1, WO 2008154736 A1, DE 102006025020 A1 und der DE 102006044794 A1 werden jeweils Möglichkeiten der Verwendung der ToF-Technologie in Fahrzeugen beschrieben. In der US 2008/0158045 A1 wird eine Anwendung mittels Radar beschrieben. In der US 6,459,476 B2 wird eine Anwendung mittels LIDAR beschrieben. Weitere Fahrerassistenzsysteme werden in der EP 1 323 570 A1 und der JP H03 64838 U beschrieben. Ausführungen der ToF-Technologie werden in der EP 2 477 043 A1 beschrieben.

Die Lichtquellen sind hierbei üblicherweise LEDs, die moduliertes Licht aussenden. Das Licht wird typischerweise mithilfe eines ToF-Modulators im Megahertzbereich OOK(On-Off Keying)-moduliert (z.B. mit 20MHz) und so in den Sichtbereich des eigenen Bildsensors abgestrahlt. Die reflektierten Lichtanteile (Photonen) werden vom Kamerasensor aufgenommen und zur Berechnung der Entfernung des reflektierenden Objekts verwendet. Diese Tiefendaten sind in weiterer Folge neben dem Graustufenbild für Anwendungen verfügbar. In den meisten Anwendungen werden derzeit Infrarot-LEDs oder Laserdioden als Beleuchtung verwendet. Als Bildsensoren dienen derzeit in der Regel PMD-Bildsensoren mit 352x288 Bildpunkten (QVGA-Auflösung). Die Bildsensoren müssen nach dem Shutterprinzip mit dem OOK-Signal beaufschlagt werden, das ebenso synchron zur Ansteuerung der ToF-Lichtquelle verwendet wird. Der Bildsensor liefert in weiterer Folge ein analoges Differenzsignal, aus dem die Tiefeninformation je Bildpunkt durch Verwendung mehrerer sequentieller Bildaufnahmen im ToF-Kameraprozessor berechnet werden kann. Die Verlustleistung herkömmlicher ToF-Kameras liegt im Bereich von 10W bis 100W und wird massgeblich von der Leistung der ToF-Lichtquelle und dem Ansteuersignal bestimmt.

Eine alltagstaugliche und für die Serienfertigung geeignete Anwendung der ToF-Technologie in der Fahrzeugtechnik konnte bislang aber noch nicht bewerkstelligt werden. Zum Einen ergeben sich technische Schwierigkeiten, da die für die ToF-Kamera erforderliche Lichtquelle einen erheblichen Mehrleistungsbedarf für die Stromversorgung des Fahrzeuges sowie entsprechenden Verkabelungsaufwand verursacht. Des Weiteren werden aus praktischen Erwägungen der Bildsensor und die Lichtquelle der ToF-Kamera getrennt voneinander am Fahrzeug angeordnet, etwa indem die Lichtquelle im Bereich des Kühlergrills platziert wird, um entgegenkommende Fahrzeuglenker nicht zu blenden, und der Bildsensor im Bereich der Windschutzscheibe. Das bedeutet jedoch für das ToF-System selbst einen zusätzlichen Verkabelungsaufwand, da das hochfrequente Modulationssignal nicht über die vorhandenen Fahrzeugschnittstellen zur ToF-Lichtquelle übertragen werden kann. Die Verkabelung und die Übertragungselektronik unterliegen überdies den strengen EMV-Richtlinien der Fahrzeugelektronik. Zudem schränkt die getrennte Montageposition der beiden Teile den Einsatzzweck wegen geringer Überlappung der Sichtbereiche weiter ein.

Zu den genannten technischen Schwierigkeiten ergeben sich zum Anderen auch praktische Probleme, etwa durch Verschmutzung einer im Bereich des Kühlergrills angeordneten ToF-Lichtquelle, sowie logistische Probleme in der Entwicklung, Fertigung und Wartung des Fahrzeugs, da mehrere unterschiedliche Fahrzeugbereiche - etwa Kühlergrill und Motorhaube, Innenraum und Windschutzscheibe, sowie Heckklappe oder Stoßstange - betroffen sind und somit unterschiedliche Unternehmensbereiche des Herstellers bei der Integration und Freigabe der entsprechenden Bauteile involviert sind.

Es besteht somit das Ziel der Erfindung diese Schwierigkeiten zu überwinden und eine alltagstaugliche und für die Serienfertigung geeignete Anwendung der ToF-Technologie in der Fahrzeugtechnik zu ermöglichen. Insbesondere soll eine Integration der ToF-Technolgie in die herkömmliche Fahrzeugtechnik erleichtert und deren Anwendbarkeit auch bei dynamischen Ausleuchtprofilen der Fahrzeugscheinwerfer erreicht werden.

Diese Ziele werden durch die Merkmale von Anspruch 1 erreicht. Anspruch 1 bezieht sich auf einen Fahrzeugscheinwerfer mit einem Gehäuse und innerhalb des Gehäuses angeordneter, modulierbarer Licht- oder IR-Strahlungsquellen, die auf einem Modulträger angeordnet sind, sowie einer Schnittstelle zur Anbindung an einen externen Fahrzeugprozessor, wobei ein innerhalb des Gehäuses angeordneter Bildsensor sowie ein mit dem Bildsensor verbundener Prozessor zur Ermittlung von Tiefeninformation aus der Rückstreustrahlung der Licht- oder IR-Strahlungsquellen angeordnet sind, wobei der Prozessor über einen Modulator mit zumindest einem Teil der innerhalb des Gehäuses angeordneten, modulierbaren Licht- oder IR-Strahlungsquellen verbunden ist, und der als ToF-Kameraprozessor dienende Prozessor zur Übertragung der vom Prozessor errechneten Daten über eine bidirektionale Datenverbindung mit der Schnittstelle verbunden ist, und der Prozessor ausgelegt ist, über die bidirektionale Datenverbindung Steuerinformationen zur Veränderung des Ausleuchtprofils vom externen Fahrzeugprozessor in Echtzeit zu übernehmen und das Ausleuchtprofil des Fahrzeugscheinwerfers unter Berücksichtigung der Erfordernisse des ToF-Bildsensors in Echtzeit zu verändern. Hierbei wird erfindungsgemäß vorgeschlagen, dass sowohl der Bildsensor als auch der Prozessor innerhalb des Gehäuses angeordnet sind, und der Bildsensor auf dem bewegbaren Modulträger oder auf einem mit dem bewegbaren Modulträger gemeinsam angesteuerten Bildsensorträger angeordnet ist, wobei der Prozessor zur Ansteuerung des bewegbaren Modulträgers mit dem bewegbaren Modulträger oder mit dem bewegbaren Modulträger und dem Bildsensorträger verbunden ist.

Die Licht- oder IR-Strahlungsquellen des Fahrzeugscheinwerfers werden somit als Lichtquellen zur Ermittlung von Tiefeninformation herangezogen, indem die Modulierbarkeit der Licht- oder IR-Strahlungsquellen bekannter Fahrzeugscheinwerfer auf LED-Basis ausgenutzt wird, wenngleich die Modulation in herkömmlicher Weise mit geringerer Frequenz vorgenommen wird. Hierzu eignen sich für die Frontscheinwerfer und Blinklichter insbesondere gelbe LEDs mit Wellenlängen des gelben Lichtanteils von etwa 600nm und für Rücklichter und Bremsleuchten rote LEDs mit Wellenlängen des roten Lichtanteils von etwa 650nm. Allerdings zeigt sich, dass sich aufgrund des zunehmend dynamisch gestalteten Ausleuchtprofils der Fahrzeugscheinwerfer auch die Rückstreustrahlung und insbesondere die Richtung der maximalen Rückstreustrahlung ändern. Der Fahrzeuglenker reagiert auf diese veränderten Ausleuchtprofile durch entsprechende Kopfbewegungen, um in die Richtung der maximalen Rückstreustrahlung zu blicken. Ein z.B. im Bereich der Windschutzscheibe angeordneter ToF-Bildsensor müsste diese Richtungsänderungen ebenfalls nachvollziehen, um ausreichende Belichtungsstärken durch das Rückstreulicht zu empfangen und Tiefeninformation von Objekten im jeweils ausgeleuchteten Bereich zu ermitteln.

Daher wird die Anordnung des Bildsensors im Gehäuse des Fahrzeugscheinwerfers, und somit in räumlicher Nähe der Licht- oder IR-Strahlungsquellen, vorgeschlagen. Der Bildsensor befindet sich somit auch bei veränderten Ausleuchtprofilen des Fahrzeugscheinwerfers stets im Bereich der maximalen Rückstreustrahlung im Nahbereich der optischen Achse, die durch die geradlinige Verbindung des Fahrzeugscheinwerfers mit dem jeweils angestrahlten Objekt definiert ist. Die Anordnung des Bildsensors im Gehäuse des Fahrzeugscheinwerfers bietet überdies den Vorteil, dass er von den zunehmend öfter vorgesehenen, eigenen Reinigungssystemen für Fahrzeugscheinwerfer profitiert.

Des Weiteren ist erfindungsgemäß auch ein eigener Prozessor vorgesehen, der die Funktion eines ToF-Kameraprozessors übernimmt und einerseits mit einem Modulator zur entsprechenden hochfrequenten Modulation der Licht- oder IR-Strahlungsquellen des Fahrzeugscheinwerfers verbunden ist, und andererseits über eine bidirektionale Datenverbindung mit der Schnittstelle zur externen Fahrzeugelektronik. Auf diese Weise kann einerseits der Übertragungsweg des hochfrequenten Modulationssignals kurz gehalten werden, ohne die sonstige Fahrzeugelektronik zu beeinträchtigen, und andererseits Steuer- und Regelungsaufgaben der Ausleuchtung und Signalisierung vom externen Fahrzeugprozessor übernommen und mit den Bedürfnissen der ToF-Tiefeninformationsermittlung abgestimmt werden. Hierfür kann der als ToF-Kameraprozessor dienende Prozessor errechnete Daten über die Schnittstelle mit dem externen Fahrzeugprozessor austauschen, Steuerinformationen zur Veränderung des Ausleuchtprofils vom externen Fahrzeugprozessor in Echtzeit übernehmen und das Ausleuchtprofil des Fahrzeugscheinwerfers unter Berücksichtigung der Erfordernisse des ToF-Bildsensors in Echtzeit verändern.

Erfindungsgemäß wird ferner vorgeschlagen, dass der Bildsensor auf dem Modulträger oder auf einem mit dem Modulträger gemeinsam angesteuerten Bildsensorträger angeordnet ist. Auf diese Weise vollzieht der Bildsensor Schwenkbewegungen des Modulträgers mit und ist dadurch stets senkrecht zur optischen Achse positioniert. Vorzugsweise ist dabei der Time-of-Flight-Kameraprozessor mit dem Modulträger und dem Bildsensorträger verbunden, sodass der ToF-Kameraprozessor auch deren Bewegungen unabhängig vom externen Fahrzeugprozessor in Echtzeit steuern kann.

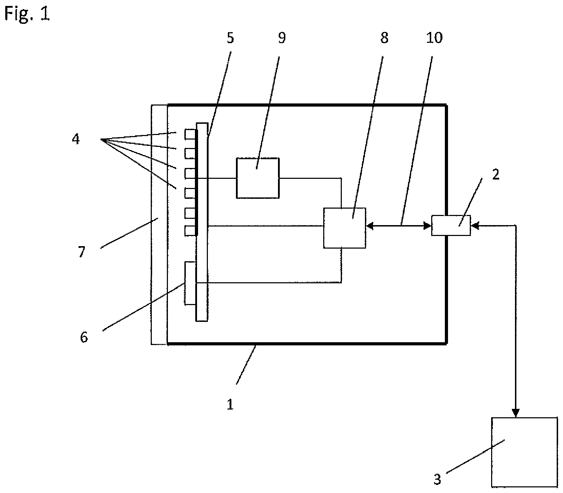

Die Erfindung wird im Folgenden anhand eines Ausführungsbeispieles mithilfe der beiliegenden Figuren näher erläutert. Es zeigt hierbei die Fig. 1 eine schematische Darstellung eines erfindungsgemäßen Fahrzeugscheinwerfers.

Die Fig. 1 zeigt einen erfindungsgemäßen Fahrzeugscheinwerfer mit einem Gehäuse 1 mit einer Schnittstelle 2 zur Anbindung an einen externen Fahrzeugprozessor 3. Innerhalb des Gehäuses 1 sind modulierbare Licht- oder IR-Strahlungsquellen 4 matrixartig angeordnet, etwa auf einem bewegbaren Modulträger 5. Zumeist sind die Licht- oder IR-Strahlungsquellen 4 auch mit einer entsprechenden Bündelungsoptik versehen. Innerhalb des Gehäuses 1 befindet sich ferner ein Bildsensor 6 zur Ermittlung von Tiefeninformation aus der Rückstreustrahlung der Licht- oder IR-Strahlungsquellen 4, wie er auch in üblichen Timeof-Flight-Kameras Anwendung findet, wobei der Bildsensor 6 im gezeigten Ausführungsbeispiel auf dem Modulträger 5 angeordnet ist, sodass bei Bewegungen des Modulträgers 5 sowohl die Licht- oder IR-Strahlungsquellen 4, als auch der Bildsensor 6 bewegt werden. Auch der Bildsensor 6 ist in der Regel mit einer eigenen Bündelungsoptik versehen. Die relative Anordnung von Bildsensor 6 und der Licht- oder IR-Strahlungsquellen 4 wird je nach Ausführung des Fahrzeugscheinwerfers variieren. Der Fahrzeugscheinwerfer ist auf seiner Abstrahlungsseite des Weiteren mit einer optionalen Schutzabdeckung 7 abgeschlossen, die für das durchscheinende Licht in beiden Durchtrittsrichtungen transparent ist. Die erfindungsgemäße Anordnung des Bildsensors 6 innerhalb des Gehäuses 1 stellt auch den Vorteil dar, dass das Übertragungsverhalten der Schutzabdeckung 7 gegenüber Licht unterschiedlicher Frequenzen dem Scheinwerferhersteller nicht nur bekannt ist, sondern auch entsprechend optimiert werden kann, insbesondere hinsichtlich des Bildsensors 6. Hierbei ist anzumerken, dass etwa Windschutzscheiben zunehmend mit optischen Eigenschaften ausgestattet werden, etwa mit Tönungen und dergleichen, die das Übertragungsverhalten für Licht hinsichtlich des Bildsensors 6 ungünstig beeinflussen können und vom Scheinwerferhersteller kaum zu beeinflussen sind. Zudem profitiert der Bildsensor 6 von allfälligen Reinigungssystemen für die Schutzabdeckung 7. Vorzugsweise kann die Schutzabdeckung 7 etwa so ausgeführt sein, dass sie Streulicht von den Licht- oder IR-Strahlungsquellen 4 zum Bildsensor 6 verringert, um die Eigenblendung des Bildsensors 6 zu minimieren.

Der Bildsensor 6 ist ferner mit einem Prozessor 8 verbunden, der die Funktion eines Time-of-Flight-Kameraprozessors erfüllt und über einen Modulator 9 mit zumindest einem Teil der innerhalb des Gehäuses 1 angeordneten, modulierbaren Licht- oder IR-Strahlungsquellen 4 verbunden ist. Da für die Gewinnung von Tiefeninformation über den Bildsensor 6 vergleichsweise hohe Modulationsfrequenzen im MHz-Bereich erforderlich sind, ist es vorteilhaft, lediglich einen Teil der modulierbaren Licht- oder IR-Strahlungsquellen 4 als ToF-Lichtquellen heranzuziehen, um einerseits die Wärmeentwicklung zu verringern, und andererseits mit dem verbleibenden Teil der modulierbaren Licht- oder IR-Strahlungsquellen 4 durch Modulation im üblichen kHz-Bereich etwa unterschiedliche Helligkeitseinstellungen zu ermöglichen. Der Modulator 9 ist in der Fig. 1 dabei als Einheit ausgeführt, die Modulationen in unterschiedlichen Frequenzbereichen vornehmen kann und sich somit zur Ansteuerung aller Licht- oder IR-Strahlungsquellen 4 eignet, unabhängig davon, ob sie zur Ausleuchtung und Signalgebung oder zur Gewinnung von Tiefeninformation dienen.

Der Prozessor 8 ist in der gezeigten Ausführungsform auch mit dem Modulträger 5 verbunden, um den Modulträger 5 anzusteuern. Der Bildsensor 6 könnte aber auch auf einem eigenen Bildsensorträger angeordnet sein, der in diesem Fall ebenfalls mit dem Prozessor 8 verbunden wäre, um den Modulträger 5 und den Bildsensorträger synchron anzusteuern. Der Prozessor 8 ist ferner über eine bidirektionale Datenverbindung 10 mit der Schnittstelle 2 verbunden, um Daten und Steuerungsbefehle mit dem externen Fahrzeugprozessor 3 auszutauschen. In funktionaler Hinsicht bilden der Prozessor 8, der Bildsensor 6, der Modulator 9 und jener Teil der modulierbaren Licht- oder IR-Strahlungsquellen 4, der für die Gewinnung von Tiefeninformation mit vergleichsweise hohen Modulationsfrequenzen im MHz-Bereich moduliert wird, eine ToF-Kamera, wenngleich die funktionale Trennung zur Ansteuerung der modulierbaren Licht- oder IR-Strahlungsquellen 4 zur Ausleuchtung und Signalgebung kaum mehr vorgenommen werden kann. Der erfindungsgemäße Fahrzeugscheinwerfer ist in seiner Grundeigenschaft der Ausleuchtung und Signalisierung somit nicht von einem herkömmlichen Fahrzeugscheinwerfer unterscheidbar, bietet jedoch zusätzlich die Funktion einer 3D-Tiefenberechnung in jedem Pixel des ToF-Bildsensors 6 und daraus ableitbarer Anwendungen. Zudem stellt der erfindungsgemäße Fahrzeugscheinwerfer zusätzlich die programmierbare Leistung des Prozessors 8 zur Verfügung, der Aufgaben zur Steuerung der Ausleuchtung oder Signalisierung, sowie zur Ereignisüberwachung im Umfeld des Fahrzeuges vom externen Fahrzeugprozessor 3 übernehmen kann. Der erfindungsgemäße Fahrzeugscheinwerfer kann somit Aufgaben wie die Berechnung der Entfernung von Objekten im Sichtbereich des Fahrzeugscheinwerfers, die Objekt- und Personenverfolgung im Sichtbereich des Fahrzeugscheinwerfers durch Berechnung ihrer Bewegungsbahnen, die Berechnung von Kollisionswahrscheinlichkeiten mit Objekten und Personen durch Extrapolation ihrer Bewegungsvektoren, die Berechnung von Ausleuchtprofilen wie Kurvenlicht, Abbiegelicht oder Nebellicht zur Unterstützung des Fahrbetriebes, die Berechnung von Ausleuchtprofilen zur Markierung von gefährdeten Objekten und Personen durch deren zusätzliche Ausleuchtung, oder die Berechnung von Ausleuchtprofilen zur Vermeidung der Blendung des Gegenverkehrs durch selektive Ausblendung beim Fahren mit Fernlicht übernehmen.

In praktischer Hinsicht obliegt der erfindungsgemäße Fahrzeugscheinwerfer hingegen logistisch der Verantwortung des Scheinwerferherstellers, lediglich die Schnittstelle 2 des Fahrzeugscheinwerfers zum externen Fahrzeugprozessor 3 muss zusätzlich geregelt werden, wobei eine bidirektionale und vorzugsweise echtzeitfähige Steuer- und Ereignisschnittsteile zum Fahrzeugprozessor 3 ausreichend ist. Auf diese Weise gelingt eine alltagstaugliche und für die Serienfertigung geeignete Anwendung der ToF-Technologie durch deren bestmögliche Integration in die herkömmliche Fahrzeugtechnik.

## Patentansprüche

1. Fahrzeugscheinwerfer oder Fahrzeugrückleuchte mit einem Gehäuse (1) und innerhalb des Gehäuses (1)
angeordneter, modulierbarer Licht- oder IR-Strahlungsquellen (4), die auf einem Modulträger (5) angeordnet sind, sowie einer Schnittstelle (2) zur Anbindung an einen externen Fahrzeugprozessor (3), wobei ein innerhalb des Gehäuses (1) angeordneter Bildsensor (6) sowie ein mit dem Bildsensor (6) verbundener Prozessor (8) zur Ermittlung von Tiefeninformation aus der Rückstreustrahlung der Licht- oder IR-Strahlungsquellen (4) angeordnet sind, wobei der Prozessor (8) über einen Modulator (9) mit zumindest einem Teil der innerhalb des Gehäuses (1) angeordneten, modulierbaren Licht- oder IR-Strahlungsquellen (4) verbunden ist, und der als ToF-Kameraprozessor dienende Prozessor (8) zur Übertragung der vom Prozessor (8) errechneten Daten über eine bidirektionale Datenverbindung (10) mit der Schnittstelle (2) verbunden ist, und der Prozessor (8) ausgelegt ist, über die bidirektionale Datenverbindung (10) Steuerinformationen zur Veränderung des Ausleuchtprofils vom externen Fahrzeugprozessor in Echtzeit zu übernehmen und das Ausleuchtprofil des Fahrzeugscheinwerfers unter Berücksichtigung der Erfordernisse des ToF-Bildsensors in Echtzeit zu verändern, **dadurch gekennzeichnet, dass** der Modulträger (5) bewegbar ist, dass sowohl der
Bildsensor (6) als auch der Prozessor (8) innerhalb des Gehäuses angeordnet sind, und der Bildsensor (6) auf dem bewegbaren Modulträger (5) oder auf einem mit dem bewegbaren Modulträger (5) gemeinsam angesteuerten bewegbaren
Bildsensorträger angeordnet ist, wobei der Prozessor (8) zur Ansteuerung des bewegbaren Modulträgers (5) mit dem bewegbaren Modulträger (5) oder mit dem bewegbaren Modulträger (5) und dem bewegbaren Bildsensorträger verbunden ist.

2. Fahrzeug mit zumindest einem Fahrzeugscheinwerfer oder eine Fahrzeugrückleuchte nach Anspruch 1.

## Claims

1. Vehicle headlamp or vehicle rear lamp, comprising a housing (1) and modulatable light or IR radiation sources (4) which are arranged within the housing (1) and are arranged on a module carrier (5), and an interface (2) for connection to an external vehicle processor (3), wherein an image sensor (6) arranged within the housing (1) and a processor (8) connected to the image sensor (6) are arranged for determining depth information from the backscattered radiation of the light or IR radiation sources (4), wherein the processor (8) is connected via a modulator (9) to at least some of the modulatable light or IR radiation sources (4) arranged within the housing (1), and the processor (8) serving as a ToF camera processor is connected to the interface (2) via a bidirectional data connection (10) for transmitting the data calculated by the processor (8) and the processor (8) is designed to accept control information for changing the illumination profile from the external vehicle processor in real time via the bidirectional data connection (10) and to change the illumination profile of the vehicle headlamp in real time taking into account the requirements of the ToF image sensor, **characterized in that** the module carrier (5) is movable, and that both the image sensor (6) and the processor (8) are arranged within the housing, and the image sensor (6) is arranged on the movable module carrier (5) or on a movable image sensor carrier which is controlled jointly with the movable module carrier (5), wherein the processor (8) is connected to the movable module carrier (5) or to the movable module carrier (5) and the movable image sensor carrier in order to control the movable module carrier (5).

2. Vehicle having at least one vehicle headlight or vehicle rear light according to claim 1.

## Revendications

1. Phare de véhicule ou feu arrière de véhicule avec un boîtier (1) et des sources de rayonnement lumineux ou IR (4) modulables qui sont disposées à l'intérieur du boîtier (1) sur un support de module (5) et avec une interface (2) pour la communication avec un processeur de bord (3) externe, dans lequel un capteur d'images (6) disposé à l'intérieur du boîtier (1) et un processeur (8) relié au capteur d'images (6) sont prévus pour acquérir des informations de profondeur à partir du rayonnement rétrodiffusé des sources de rayonnement lumineux ou IR (4), dans lequel le processeur (8) est relié par un modulateur (9) à une partie au moins des sources de rayonnement lumineux ou IR (4) modulables disposées à l'intérieur du boîtier (1) et le processeur (8) servant de processeur de caméra à temps de vol communique avec l'interface (2) par une liaison de données bidirectionnelle (10) en vue de la transmission des données calculées par le processeur (8), et dans lequel le processeur (8) est conçu pour recevoir en temps réel, par la liaison de données bidirectionnelle (10), des informations de commande du processeur de véhicule externe pour la modification du profil d'éclairement et pour modifier en temps réel le profil d'éclairement du phare de véhicule en tenant compte des besoins du capteur d'images à temps de vol, **caractérisé en ce que** le support de module (5) est mobile, **en ce qu'**aussi bien le capteur d'images (6) que le processeur (8) sont disposés à l'intérieur du boîtier et le capteur d'images (6) est disposé sur le support de module mobile (5) ou sur un support de capteur d'images mobile déplacé en même temps que le support de module mobile (5), le processeur (8) communiquant, pour commander le support de module mobile (5), avec le support de module mobile (5) ou avec le support de capteur d'images mobile déplacé en même temps que le support de module mobile (5).

2. Véhicule avec au moins un phare de véhicule ou un feu arrière de véhicule selon la revendication 1.
